# FASCICULE DE BREVET EUROPEEN

(11) **EP 0 552 083 B1**
(45) Date de publication et mention de la délivrance du brevet: **02.04.1997**
(21) Numéro de dépôt: 93400047.2
(22) Date de dépôt: 11.01.1993
(51) Int. Cl.: B30B 9/06, A23N 1/00, B30B 9/22

(54) **Pressoir performant pour produits divers**
Presse für verschiedene Produkte
Press for diverse products

(30) Priorité: 13.01.1992 FR 9200421; 06.11.1992 FR 9213793
(43) Date de publication de la demande: 21.07.1993
(73) Titulaire: Egretier, Jean-Michel, F-11110 Coursan (FR)
(72) Inventeur: Egretier, Jean-Michel, F-11110 Coursan (FR)
(74) Mandataire: Manresa Val, Manuel

(56) Documents cités:
- DE-C- 46 417
- DE-C- 341 914
- GB-A- 1 481 415
- US-A- 4 603 909

## Description

L'invention est relative aux pressoirs pour produits divers, notamment pour la vendange, aptes à extraire le jus qu'ils contiennent, du genre comportant essentiellement:
a) Un moyen d'égouttage, généralement du type grille cylindrique, pourvu d'une ouverture de chargement et d'une ouverture de déchargement, contenu dans la chambre de pressurage;
b) Un moyen de poussée, généralement du type piston cylindrique, occupant toute la section du moyen d'égouttage;
c) Un moyen de retenue, notamment un portillon placé au niveau de l'ouverture de déchargement et réglable en position par rapport à ladite ouverture de manière à contrôler la pression d'extraction du jus.

Les pressoirs connus du genre en question sont de deux types:
- le premier met en oeuvre un moyen de poussée constitué par une vis hélicoïdale qui présente l'inconvénient de produire des bourbes importantes et qui fait l'objet d'une interdiction d'utilisation de la part des services français des appellations d'origine;
- le second met en oeuvre un moyen de poussée constitué par un piston qui présente l'inconvénient de produire des strates de matière comprimée qu'il faut réduire par l'utilisation de fortes pressions de fonctionnement qui ont pour effet d'écraser les parties végétales de la vendange et de donner un vin de moins bonne qualité (goût en particulier)

Ce second type est décrit dans les brevets GB-A-1481415 et DE-C-3419914.

Le brevet GB-A-1481415 décrit une presse à compacter qui comporte une chambre (4), unique, une ouverture de chargement (3), fixe, appartenant à la paroi de ladite chambre et un piston (7), unique, pourvu d'une plaque (10) qui vient fermer ladite ouverture de chargement lorsque ledit piston se déplace dans ladite chambre.

Le brevet DE-C-3419914 décrit un pressoir qui comporte deux chambres de compression, délimitées par les parois (g et g'), mobiles, en opposition, contenant chacune un seul piston (c ou c') qui occupe toute la section disponible. Chaque chambre de compression est fermée par le déplacement de sa paroi (g ou g') qui comporte une ouverture de chargement (h ou h'), le déchargement étant effectué par le déplacement, en sens inverse, de chacune desdites parois.

En outre, les performances quantitatives de ces deux types de pressoir ne sont pas élevées.

La présente invention vise à réaliser un pressoir permettant:
a) d'éliminer les inconvénients sus-mentionnés par l'utilisation d'un moyen de poussée tout à fait adapté au pressurage de produits divers dont on veut en extraire le jus avec en plus la possibilité de le réaliser en kit pour le monter, par simple échange, à la place des vis hélicoïdales équipant de nombreux pressoirs actuellement mis au rebut;
b) de faciliter le pressurage des produits visqueux (y compris les vins doux naturels) par la mise en place d'une unité de pré-pressurage (meilleur écoulement du jus);
c) d'accroître les cadences de pressurage puisque les chambres de pressurage principale et auxiliaire peuvent fonctionner simultanément;
d) de diminuer l'encombrement de la chambre de pressurage principale;
e) d'avoir un pressurage plus poussé par la mise en place, dans la zone de l'axe de la chambre, d'un moyen à géométrie et à volume variables permettant de comprimer radialement le produit déjà comprimé axialement.

L'invention concerne à cet effet un pressoir:
a) dont le moyen de poussé comporte au moins deux parties, pourvues chacune d'un moyen d'entraînement propre, notamment du type vérin hydraulique ou pneumatique, aptes à se déplacer, par rapport au moyen d'égouttage, simultanément ou séparément, dans le même sens ou dans des sens opposés, en fonction de la phase de fonctionnement dans laquelle se trouve le pressoir; ainsi réalisé, ledit moyen a pour effet de casser et de faire basculer les strates de manière à les résorber lors d'une nouvelle compression;
b) dont la chambre principale comporte, reliée à l'ouverture de chargement, au moins une chambre de pré-pressurage auxiliaire, de volume inférieur à celui de la chambre de pressurage principale, alimentée par le produit à pressurer par l'intermédiaire de la trémie de chargement, associée à un premier moyen de poussé, généralement du type piston cylindrique, qui traverse le fond de la trémie pour alimenter d'un côté la chambre de pressurage qui comporte son propre moyen d'égouttage, généralement du type grille cylindrique, et un deuxième moyen de poussée situé à la sortie de la chambre de pré-pressurage et qui sert d'une part de surface d'appui lorsque le premier moyen de poussé comprime le produit à pressurer et d'autre part de moyen de transfert, vers la chambre principale, du produit pré-pressuré pour lui permettre de subir le cycle de pressurage lié au moyen de poussée associé à ladite chambre principale.

La chambre principale comporte en outre le long de son axe, un moyen à volume variable réalisé préférentiellement sous la forme d'un cylindre qui comporte une première zone rigide suivie d'une deuxième zone déformable dont le volume croît sous l'action d'une commande de manière à comprimer radialement le produit préalablement comprimé axialement grâce au moyen de poussé principal.

Les caractéristiques et les avantages de l'invention vont apparaître plus clairement à la lecture de la description détaillée qui suit d'un mode de réalisation préféré de l'invention donné à titre d'exemple seulement et représenté aux dessins annexés.
- la figure 1 est un schéma de principe relatif aux divers phases de A à E de fonctionnement du moyen de poussée principal selon l'invention;
- la figure 2 est une vue en coupe longitudinale du pressoir de base;
- la figure 3 est une vue en coupe longitudinale d'une variante de celui-ci;
- la figure 4 est une vue en coupe transversale de ce dernier;
- les figures 5 à 10 montrent le fonctionnement général de l'ensemble pressoir selon l'invention.

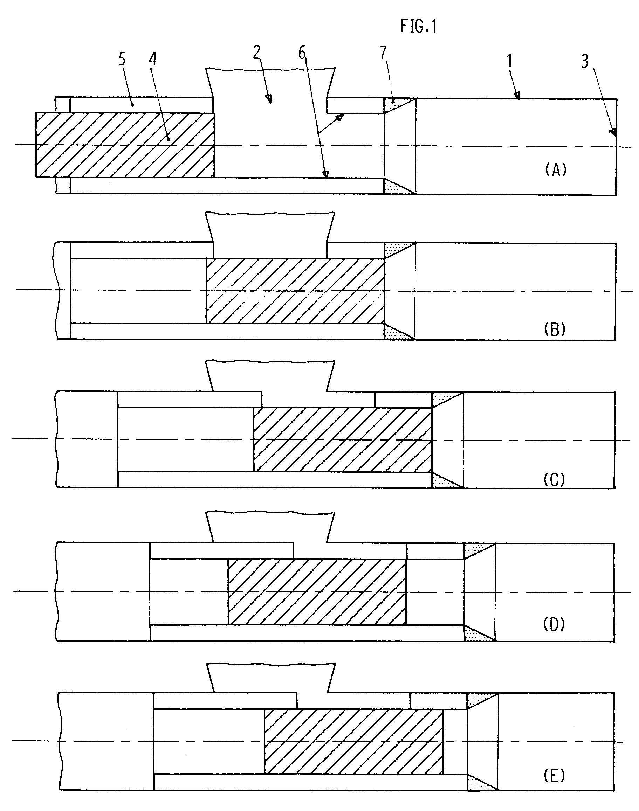

L'ensemble représenté à la figure 1 comporte :
- un moyen d'égouttage (1) constitué généralement par une grille cylindrique d'un type classique, solidaire du châssis de l'ensemble, pourvu d'une ouverture de chargement (2), généralement latérale, et d'une ouverture de déchargement (3), généralement en bout de grille;
- un moyen de poussée (4,5), constitué généralement par un piston cylindrique, réalisé en au moins deux parties (4) et (5) pourvues chacune d'un moyen d'entraînement propre, généralement du type vérin hydraulique ou pneumatique, aptes à se déplacer, par rapport au moyen d'égouttage (1), simultanément ou séparément, dans le même sens ou dans des sens opposés, en fonction de la phase de fonctionnement dans laquelle se trouve le pressoir :
   .. la section totale desdites deux parties du moyen de poussée occupe toute la section intérieure du moyen d'égouttage;
   ledit moyen de poussée peut être réalisé avantageusement en deux parties concentriques : une partie centrale (4) pourvue d'une surface fermée et une partie périphérique (5) pourvue d'une ouverture de chargement latéral (2), d'une grille d'égouttage périphérique secondaire (6) et d'une surface frontale (7);
   .. ledit moyen de poussée peut également être réalisé en deux parties correspondant chacune à un demi-cylindre : toute autre combinaison et toute autre forme (carrée, rectangulaire ...) étant envisageable;
   .. les moyens d'entraînement des parties constituant le moyen de poussée peuvent être solidaires du châssis du pressoir, le moyen d'entraînement de la partie centrale dudit moyen de poussée peut être solidaire de la partie périphérique dudit moyen de manière à diminuer la course de ladite partie centrale et de son moyen d'entraînement : toute autre combinaison étant envisageable.

Une possibilité de fonctionnement du pressoir selon l'invention est la suivante :
- phase A : chargement;
- phase B : compression partielle par la seule avancée du piston central;
- phase C : compression totale par l'avancée simultanée des deux parties du piston;
- phase D : cassure des strates par l'avancée du piston périphérique avec nettoyage simultané de la grille et basculement de celles-ci par le retrait du piston central;
- phase E : compression supplémentaire par l'avancée du piston central. Les phases A à E peuvent être consécutives ou dans un ordre différent avec répétition de certaines d'entre elles.

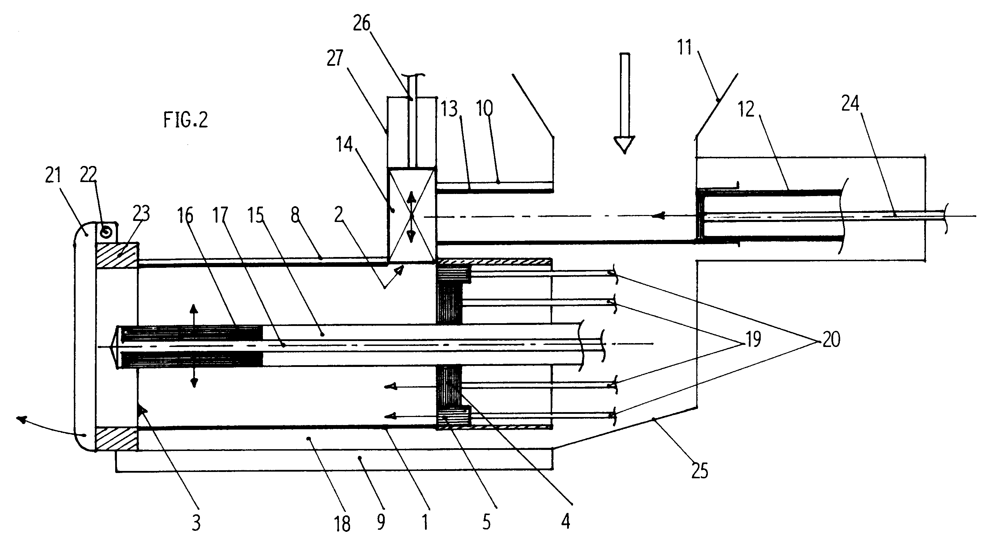

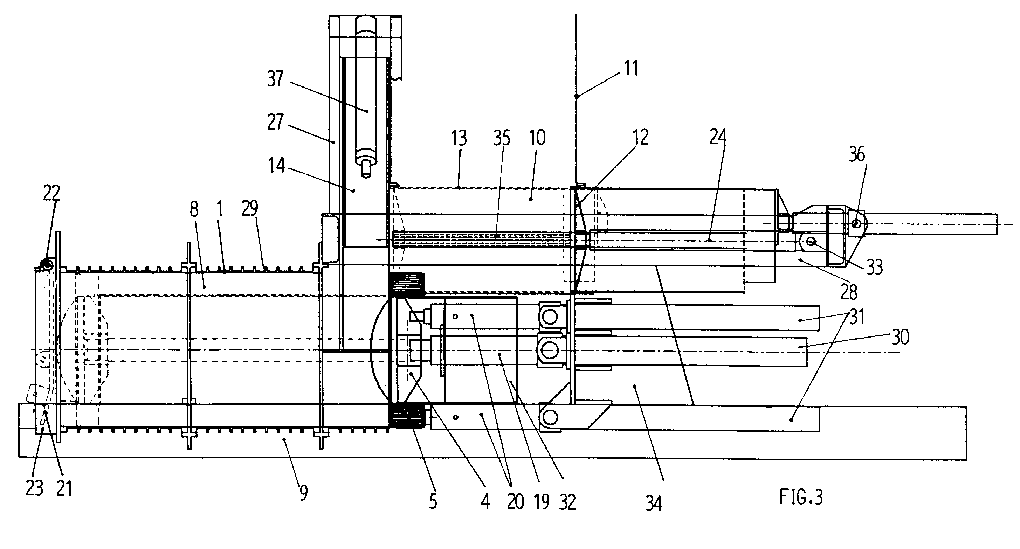

Le pressoir représenté à la figure 2 comporte une chambre de pressurage principale (8) reposant sur le châssis (9) et comportant un moyen d'égouttage (1), généralement du type grille cylindrique, pourvu d'une ouverture de chargement (2),généralement en partie haute ou latérale, et une ouverture de déchargement (3),généralement en bout de grille. Les jus provenant du pressurage sont récupérés dans le fond (18) de la chambre (8).
Le moyen de poussée associé à la chambre (8),généralement cylindrique, est réalisé en une ou deux parties (4) et (5) pourvues chacune d'un moyen d'entrainement spécifique, généralement du type vérin hydraulique ou pneumatique, relié aux tiges (19) et (20), aptes à se déplacer,par rapport au moyen d'égouttage (1), simultanément ou séparément, dans le même sens ou dans des sens opposés. Ledit moyen de poussée peut être réalisé avantageusement en deux partie concentriques : centrale cylindrique (4) pour la première et annulaire périphérique (5) pour la deuxième. Les vérins reliés aux tiges (19) et (20) apparaissent à la figure 2.
Un portillon (21), réglable en position au moyen d'un vérin (non représenté) qui le fait tourner autour de l'axe (22),placé au niveau de l'ouverture de déchargement, sert de moyen de retenue pendant le pressurage et d'évacuation dans la phase suivante. Il est fixé à l'extrémité (23) de la chambre principale (8).
Ladite chambre comporte également,le long de son axe, un moyen déformable à volume variable réalisé de préférence sous la forme d'un cylindre qui comporte une première zone rigide (15) suivie d'une deuxième zone déformable (16) dont le volume croit sous l'action d'une commande (17), mécanique, hydraulique ou pneumatique, de manière à comprimer radialement le produit préalablement comprimé longitudinalement grâce au moyen de poussée (4,5). Lorsque la commande est mécanique les pièces (15) et (17) se déplacent l'une par rapport à l'autre, généralement au moyen de vérins, pour comprimer la zone (16), en matière souple, qui voit son volume croître.
Lorsque la commande est pneumatique ou hydraulique, (17) est un canal aménagé dans (15) par lequel passe le fluide qui vient gonfler la pièce (16).
Le pressoir selon l'invention comporte en outre, reliée à l'ouverture de chargement (2), une chambre de pré-pressurage auxiliaire (10), de volume inférieur à celui de la chambre de pressurage principale (8), alimentée par le produit à pressurer par l'intermèdiaire d'une trémie de chargement (11), associée à un premier moyen de poussée (12), généralement du type piston cylindrique, qui traverse le fond de la trémie pour alimenter d'un côté la chambre de pré-pressurage qui comporte son propre moyen d'égouttage (13), généralement du type grille cylindrique, et un deuxième moyen de poussée (14) situé à la sortie de la chambre de pré-pressurage et qui sert d'une part de surface d'appui et d'autre part de moyen de transfert,vers la chambre principale, du produit pré-pressuré.
Le moyen de poussée (12) se présente sous la forme d'un caisson mis en mouvement par la tige (24) généralement reliée à un moyen de déplacement du type vérin.
Un carter (25) relie la chambre principale (8) à la chambre auxiliaire (10).
Le jus de la chambre (10) est également récupéré en (18).
Le moyen de poussée (14) est généralement mis en mouvement par un vérin (37 sur figure 3) relié à la tige (26). Ledit moyen est contenu dans une chambre de transfert (27).
L'ensemble (10,11) peut être placé à la verticale de la chambre (8) pour diminuer l'encombrement longidudinal du pressoir.
Selon une variante de l'invention, la pièce (15) peut être remplacée par un tube pourvu d'une pluralité de perforations servant de drain.

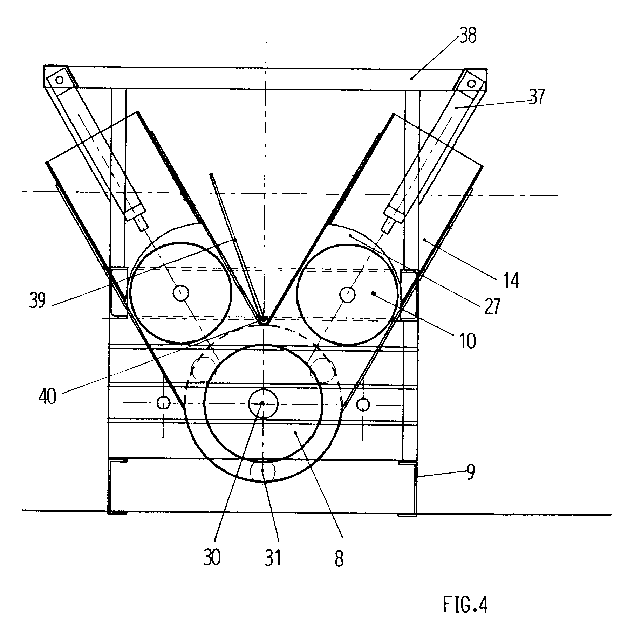

Le pressoir représenté aux figure 3 et 4 comporte une chambre de pressurage principale (8) dans laquelle on a supprimé le moyen (15,16,17) de manière à réaliser le piston cylindrique (4) plein, le piston périphérique annulaire (5) restant inchangé. La partie en pointillés sur le dessin montre le déplacement des deux pistons dans la chambre (8). Le moyen d'égouttage (1) présente des renforts (29). Les tiges (19) et (20) d'entraînement des pistons (4) et (5) sont commandées par les vérins (30) et (31), la pièce (32) servant de guide-support. Les vérins (31) sont de préférence au nombre de 3.
Le pressoir représenté comporte également deux chambres de pré-pressurage auxiliaires (10) symètriques par rapport au plan longidudinal vertical de symètrie de l'ensemble. La tige (24) d'entraînement du piston (12) est commandée par le vérin (33) solidaire du châssis supérieur (28) qui est relié au châssis inférieur (9) par l'intermèdiaire de la pièce (34).
Selon une variante de l'invention, un tube (35), du type drain, pourvu d'une pluralité de perforations, placé au niveau de l'axe de la tige (24) et comporte son propre moyen de déplacement longitudinal.
Selon une autre variante de l'invention, la grille l'égouttage (13) est rendue mobile le long de son axe grâce au vérin (36) et à des glissières (non représentées). Elle peut être réalisée en deux parties, la partie supérieur mobile et la partie inférieure fixe.
Les deux chambres de pré-pressurage (10) peuvent travailler simultanément ou en alternance. Le piston (12) de chaque chambre peut être également réalisé en au moins deux parties comme le sont les pistons (4) et (5) de la chambre principale.
Un volet (39),pivotant autour de l'axe (40), vient alternativement obturer la zone de chargement de la chambre auxiliaire qui n'est pas en compression. Il est également possible, au lieu d'avoir des chambres auxiliaires débouchant en paralléle dans plusieurs ouvertures pratiquées sur la chambre principale, d'avoir des chambres auxiliaires en cascade, ou en série, débouchant, pour la dernière, dans une seule ouverture de la chambre principale.
Chaque chambre de transfert (27) comporte un piston (14) commandé par un vérin (37) solidaire d'un support (38).
Les chambres auxiliaires (10) peuvent être également réalisées perpendiculaires à la chambre principale (8) afin d'éliminer la chambre de transfert (27).
Selon une autre variante de l'invention, les pistons (4) et (5) peuvent être remplacés par un seul piston qui les regroupe.
Selon une autre variante de l'invention, le piston central (4), de diamètre réduit, peut fonctionner à la manière d'un drain associé à une jupe en forme de grille qui lui est solidaire. Il avance dans ce cas dans la chambre de pressurage avant le déplacement du piston périphérique (5).

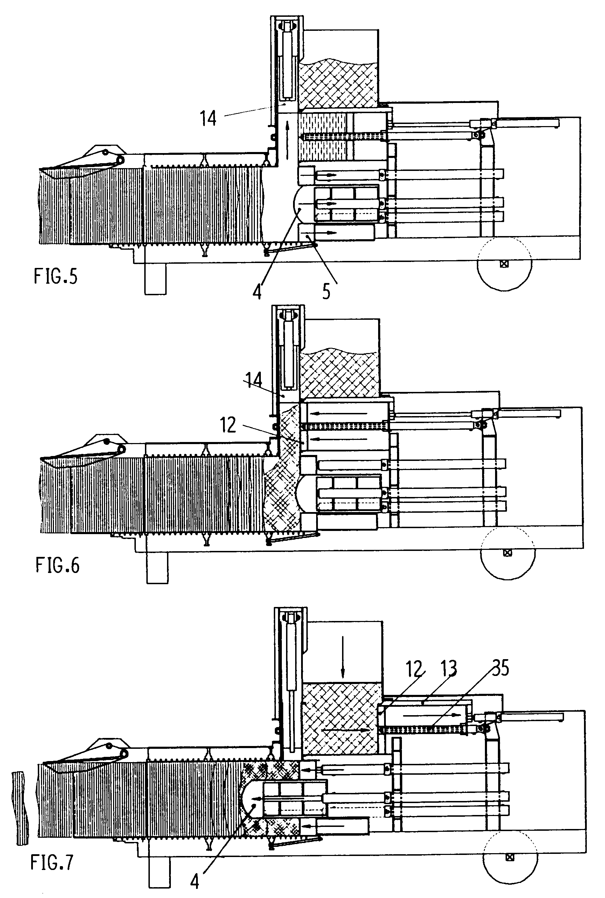

Les figures 5 à 10 montrent une possibilité générale du fonctionnement de l'ensemble pressoir selon l'invention :
- figure 5 : préparation au transfert :
   a) recul des pistons (4) et (5)
   b) recul du piston (14)
      (la pression sur le piston (12) appartenant à la deuxième chambre auxiliaire étant maintenue)
- figure 6 : phase de transfert avec 1ère dislication des strates :
   a) avance du piston (12)
   b) avance du piston (14)
- figure 7 : phase de chargement :
   a) recul de la 1/2 grille mobile (13)
   b) recul du piston (12) et du drain (35)
   c) basculement du volet de chargement (39)
   d) avance du piston (4)

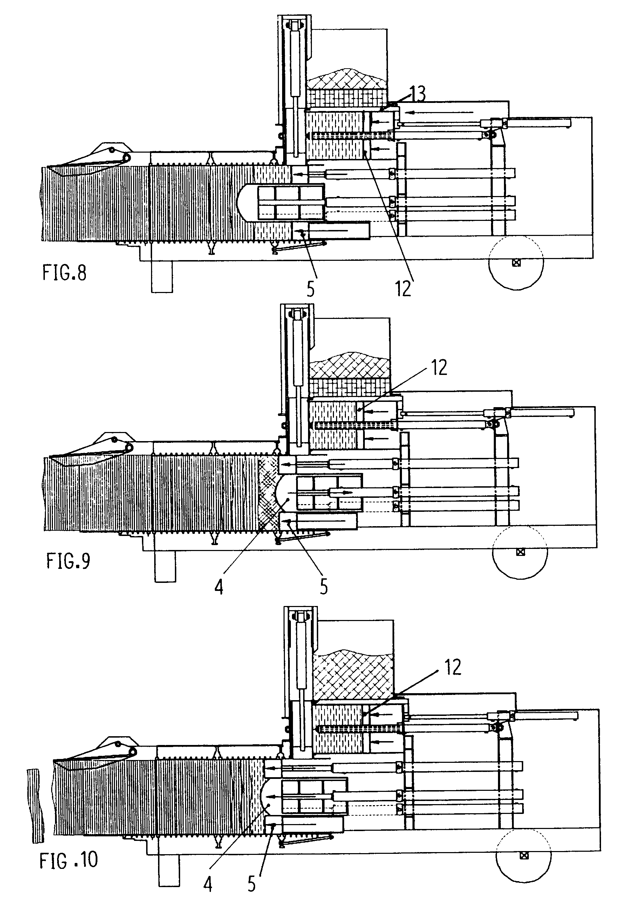

- figure 8 : première phase de pressurage :
   a) avance de la 1/2 grille (13)
   b) mise en pression du piston (12)
   c) mise en pression du piston (5)
- figure 9 : deuxième dislocation des strates :
   a) avance du piston (5)
   b) recul libre du piston (4)
      (la pression sur le piston (12) des deux chambres auxiliaires étant maintenue)
- figure 10 : deuxième phase de pressurage : mise en pression simultanée des pistons (4) et (5) avec avance jusqu'à la limite programmée (la pression étant maintenue sur les pistons 12).
Toutes les combinaisons entre ces différentes phases sont possibles en simultanéité ou en alternance.

Bien entendu, l'invention n'est pas limitée aux modes de réalisation décrits et représentés pour lesquels on pourra prévoir d'autres variantes dans les pistons, le nombre de chambres auxiliaires, les phases de fonctionnement, sans pour cela sortir du cadre de l'invention.

## Revendications

1. Pressoir pour produits divers, notamment pour la vendange, apte à extraire le jus qu'ils contiennent du genre comportant essentiellement:
a) un moyen d'égouttage (1), généralement du type grille cylindrique, délimitant intérieurement le volume utile de la chambre de pressurage, pourvu d'une ouverture de chargement (2) et d'une ouverture de déchargement (3).
b) un moyen de poussée (4,5), généralement du type piston cylindrique, occupant toute la section utile de la chambre de pressurage;
c) un moyen de retenue (21), généralement du type portillon, placé au niveau de l'ouverture de déchargement, réglable en position par rapport à ladite ouverture, apte à contrôler la pression d'extraction du jus;
caractérisé en ce que le moyen de poussée est réalisé en au moins deux parties (4) et (5), avantageusement cylindrique pour la première et annulaire pour la deuxième, dont la section totale occupe toute la section utile de la chambre de pressurage (8) délimitée par la grille (1) et qui se déplacent longitudinalement dans ladite chambre, simultanément ou séparément, dans le même sens ou dans des sens opposés, en fonction de la phase de fonctionnement dans laquelle se trouve le pressoir; et en ce que l'ouverture de chargement (2) de la chambre de pressurage principale (8), contenant le moyen de poussée (4,5) est alimentée par une chambre de pré-pressurage auxiliaire (10), de volume inférieur à celui de la chambre principale, alimentée elle même par le produit à pressurer par l'intermédiaire d'une trémie de chargement (11), associée à un premier moyen de poussée (12), généralement du type piston cylindrique, qui traverse le fond de la trémie pour alimenter d'un côté la chambre de pré-pressurage, qui comporte son propre moyen d'égouttage (13), généralement du type grille cylindrique et à un deuxième moyen de poussée (14) situé à la sortie de ladite chambre auxiliaire dans une chambre de transfert (27) et qui sert d'une part du surface d'appui lorsque le premier moyen de poussée (12) comprime le produit à pressurer et d'autre part de moyen de transfert, vers la chambre principale, du produit pré-pressuré pour lui permettre de subir le cycle de pressurage lié au moyen de poussée (4,5) associé à ladite chambre principale.

2. Pressoir, selon la revendication 1, caractérisé en ce que la chambre de pressurage principale (8) comporte, le long de son axe, un moyen à volume variable réalisé préférentiellement sous la forme d'un cylindre qui comporte une première zone rigide (15) suivie d'une deuxième zone déformable (16) dont le volume croît sous l'action d'une commande (17), mécanique, hydraulique ou pneumatique, de manière à comprimer radialement le produit préalablement comprimé longitudinalement grâce au moyen de poussée (4,5).

3. Pressoir, selon la revendication 1, caractérisé en ce que la partie centrale du moyen de poussée, de diamètre réduit, est associée à une jupe en forme de grille qui lui est solidaire de manière à fonctionner également comme un drain.

4. Pressoir, selon la revendication 1, caractérisé en ce que le moyen de poussée (12) de la chambre auxiliaire est associé à un drain central (35) qui comporte son propre moyen de déplacement longitudinal.

5. Pressoir, selon la revendication 1, caractérisé en ce que la grille d'égouttage (13) est rendue mobile le long de son axe grâce au vérin (36) de manière à dégager l'ouverture de chargement.

6. Pressoir, selon la revendication 5, caractérisé en ce que seule la partie supérieure de la grille d'égouttage (13) est rendue mobile le long de son axe.

7. Pressoir, selon la revendication q, caractérisé en ce que le piston (12) de chaque chambre auxiliaire est réalisé en au moins deux parties du type de celles utilisées dans la chambre principale.

8. Pressoir, selon la revendication 1, caractérisé en ce que les chambres auxiliaires (10) peuvent être montées en cascade sur une seule ouverture de chargement de la chambre principale (8).

## Claims

1. Press for diverse products, specially for squeezing the juice from grapes of the type which includes:
a) dripping means (1), generally formed as a cylindrical grate type, defining the effective volume of the pressing chamber, provided with an loading opening (2) and an unloading opening (3);
b) a thrust means (4,5), usually of the cylindrical piston type, which occupies the whole effective cross-section of the pressing chamber;
c) a retaining means (21), namely a gate located level with the unloading opening and adjustable in its position with respect to said opening in such a way that it controls the juice extraction pressure,
characterized in that the thrust means is constituted in at least two parts (4) and (5), the first one advantageously cylindrical and annular the second one, occupying the whole operative section of the pressing chamber (8) delimited by the grate (1), said thrust means being suitable to be longitudinally moved along said chamber, either simultaneously or separately, in the same sense or in opposite senses, depending on the operational stage of the press; and in that the loading aperture (2) of the main pressing chamber (8) containing the thrust means (4,5) is fed by an auxiliary pre-pressing chamber (10), having a lower volume than that of the main pressing chamber, and being fed with product to be pressed by means of a loading hopper (11) associated to a first thrust means (12), usually of the cylindrical piston type, which crosses the bottom of the hopper to feed on one side the pre-pressing chamber including its own usually cylindrical grate type dripping means (13) and on the other a transfer chamber (27), located at the outlet of the pre-pressing chamber, having a second thrust means (14) and which serves, on one hand as a supporting surface when the first thrust means (12) compresses the product to be pressed and on the other hand as transfer means toward the main chamber for the pre-pressed product to allow it to sustain the pressing cycle linked to the thrust means (4,5) associated to said main chamber.

2. Press, as per the claim 1, characterised in that the main press chamber (8) comprises along its axis a means of variable volume preferably formed in the shape of a cylinder including a first rigid portion (15) followed by a second distortable portion (16) whose volume can be increased under the action of a mechanical, hydraulic o pneumatic drive , in such a way that it radially compresses products which have been previously lengthwise compressed by the thrust means (4,5).

3. Press, as per the claim 1, characterised in that the thrust means central part, of a small diameter, is associated to a grate-shaped buffer which is integral with it in order to equally operate as a drain.

4. Press, as per the claim 1, characterised in that the auxiliary chamber thrust means (12) is associated to a central drain (35) which includes its own lengthwise moving means.

5. Press, as per the claim 1, characterised in that the dripping grate (13) is made moveable along its axis by a jack (36) in order to clear the loading opening.

6. Press, as per the claim 5, characterised in that only the upper part of the dripping grate (13) is made moveable along its axis.

7. Press, as per the claim 1, characterised in that the piston (12) of each auxiliary chamber is constituted in at least two parts like the ones of the main chamber.

8. Press, as per the claim 1, characterised in that the two auxiliary chambers (10) can be placed in series, opening into a single loading opening of the main chamber (8).

## Patentansprüche

1. Nahrungsmittelpresse, besonders für die Traubenernte, dazu geeignet, den enthaltenen Saft auszupressen, wozu sie besonders folgende Elemente enthält:
a) ein Abtropfmittel (1), im allgemeinen von der Art eines zylindrischen Siebes, welche innenseitig den nutzbaren Rauminhalt der Pressenkammer begrenzt, ausgestattet mit einer Beschickungsöffnung (2) und einer Entleerungsöffnung (3);
b) ein Druckmittel (4,5), im allgemeinen von der Art eines zylindrischen Kolbens, welcher die gesamte Nutzfläche der Presskammer beaufschlagt;
c) ein Rückhaltemittel (21), im allgemeinen vom Typ einer Klappe, welches in der Öffnungszone für die Entleerung angeordnet ist und dessen Stellung in bezug auf die genannte Öffnung einstellbar und dazu geeignet ist, den Saftabziehdruck zu überwachen;
dadurch gekennzeichnet, daß das Druckmittel zum mindesten aus zwei Teilen (4) und (5) besteht, von welchen die erste vorteilhaft zylindrischer Bauart ist und die zweite ringförmig, deren Gesamtquerschnittsfläche den ganzen nutzbaren Querschnitt der Pressenkammer (8) ausfüllt, welche von dem Sieb (1) begrenzt ist und welche sich in Längsrichtung in der genannten Kammer gleichzeitig oder voneinander getrennt je nach der Betriebsphase in welcher sich die Presse befindet, im selben oder in gegenläufigen Bewegungsrichtungen bewegen, und dadurch, daß die Beschickungsöffnung (2) der Hauptpresskammer (8), welche das Druckmedium (4,5) enthält, von einer Hilfs-Vorpresskammer (10) gespeist wird, dessen Rauminhalt kleiner ist als jener der Hauptkammer, die mit dem zu pressenden Produkt vermittels eines Beschickungstrichters (11) gefüllt wird und mit einem ersten Druckmittel (12) verbunden ist, welches im allg. von der Art eines zylindrischen Kolben ist, welcher den Grund des Beschickungstrichters durchragt, um einerseits die Vorpresskammer zu speisen, die mit ihren eigenen Abtropfmittel (13) ausgestattet ist, welches im allg. die Form eines zylindrischen Siebes annimmt und auch ein zweites Druckmittel (14) umfaßt, welches am Auslauf aus der genannten Hilfskammer angeordnet ist, und in eine Ueberführungskammer (27) mündet, welche einerseits als Stützfläche dient, wenn das erste Druckmittel (12) das zu pressende Produkt zusammendrückt und andererseits als Transfermittel dient, um das vorgespresste Produkt in die Hauptkammer überzuführen, um es zu ermöglichen, daß dies dort dem Presszyklus unterworfen wird, welcher vom Druckmittel (4,5) durchgeführt wird, welches mit der genannten Hauptkammer in Verbindung steht.

2. Presse gem. Patentanspruch 1, dadurch gekennzeichnet, daß die Hauptpresskammer (8) längs ihrer Achse ein Mittel änderbaren Rauminhaltes enthält, welches vorzugsweise in Form eines Zylinders verwirklicht wird, welcher eine erste starre Zone (15) beinhaltet, welcher eine zweite, verformbare Zone (16) folgt, deren Rauminhalt unter der Bedienung einer Steuerung (17) anwächst, die mechanisch, hydraulisch oder pneumatisch sein kann, so daß das dank dem Druckmittel (4,5) in Längsrichtung zusammengepresste Produkt nun radial zusammengepresst wird.

3. Presse gem. Patentanspruch 1, dadurch gekennzeichnet, daß der Mittelteil des Druckmediums verhältnismäßig geringeren Durchmessers mit einem Mantel in Form eines Siebes fest verbunden ist, so daß es ebenfalls wie eine Drainage wirkt.

4. Presse gem. Patentanspruch 1, dadurch gekennzeichnet, daß das Druckmittel (12) der Hilfskammer mit einem Mittelabfluss (35) verbunden ist, welcher seine eigene Längsbewegung besitzt.

5. Presse gem. Patentanspruch 1, dadurch gekennzeichnet, daß das Abtropfsieb (13) dank dem Zylinder (36) längs seiner Achse beweglich ist, so daß die Beschickungsöffnung freigegeben wird.

6. Presse gem. Patentanspruch 5, dadurch gekennzeichnet, daß lediglich der obere Teil des Abtropfsiebes (13) längs seiner Achse beweglich ist.

7. Presse gem. Patentanspruch 6, dadurch gekennzeichnet, daß der Kolben (12) jeder Hilfskammer aus mindestens 2 Teilen besteht, wie sie in der Hauptkammer zur Anwendung kommen.

8. Presse gem. Patentanspruch 1, dadurch gekennzeichnet, daß die Hilfskammern (10) kaskadenförmig über einer einzigen Beschickungsöffnung der Hauptkammer (8) angeordnet sein können.
